# EUROPEAN PATENT APPLICATION

(11) **EP 1 475 965 A2**
(43) Date of publication of application: **10.11.2004**
(21) Application number: 04010699.9
(22) Date of filing: 05.05.2004
(51) Int. Cl.: H04N 5/781, H04N 5/85

(54) **Recording and reproduction apparatus and recording method**

(30) Priority: 07.05.2003 JP 2003128634
(71) Applicant: Orion Electric Company, Ltd., Takefu-shi, Fukui-ken (JP)
(72) Inventor: Ohnishi, Tsuginori, Takefu-shi Fukui-ken (JP)
(74) Representative: Kirschner, Klaus Dieter, Dipl.-Phys.

(57) **Abstract**

This invention facilitates an operation after save recording of data in a hard disc if a residual capacity of a DVD is lessened while the data is recorded in the DVD. If it is detected that the residual capacity of the DVD is lessened while a program is recorded in the DVD, then save recording of the program in the hard disc is started, and the recording of the program in the DVD is stopped. If it is detected that the DVD is ejected and exchanged to a new DVD, the recording of the program in the new DVD is automatically started. While continuing the save recording of the program in the hard disc, the save-recorded program is time-shift reproduced from the beginning. The program reproduced from the hard disc is splice-recorded in the DVD.

## Description

The present invention relates to a recording and reproduction apparatus and method.

In a recording and reproduction apparatus using a plurality of recording media, e.g., a DVD and a hard disc, if a residual capacity of the DVD is lessened while recording a program in the DVD, save recording for allowing the program to be continuously recorded in the hard disc is carried out. By doing so, the program can be recorded up to the end without stopping recording halfway. Further, by splice recording for copying the program recorded in the hard disc into the DVD after finishing recording the program, the entire program can be recorded in one DVD.

A recording and reproduction apparatus having these functions is disclosed by Japanese Patent Application Laid-Open No. 2002-74839 (Paragraph 0009). This recording and reproduction apparatus uses a detachable DVD and non-detachable hard disc. If a capacity of a recordable area is below a threshold while recording a program in the DVD, the data is continuously recorded in the hard disc. After finishing recording the program, a user is notified while reproducing the recorded program that the data is save-recorded in the hard disc. At this moment, the user can select whether to reproduce the program or to record the save data in the DVD. If the save data is to be recorded in the DVD, then an unnecessary area of the DVD now in use is deleted, and the data is copied from the hard disc into the DVD. Alternatively, the data recorded in the DVD now in use is recorded in the hard disc to thereby record the entire data in the hard disc, and the data is then copied into a new DVD. If the program is to be reproduced, the data recorded in the DVD and the hard disc are reproduced seamlessly. Thereafter, the user can select whether to record the save data in the hard disc into the DVD or to delete the save data.

The splice recording from the hard disc to the DVD is carried out manually after the recording of the program in the hard disc is finished. Due to this, even if the user wants to record a remainder of the program in the DVD, the splice recording cannot be carried out until the recording of the program in the hard disc is finished. During this time, the user has to wait, so that it disadvantageously takes lots of time before an editing operation. In addition, if the user is not present when the recording of the program in the hard disc is finished, the splice recording cannot be started right away.

It is an object of the present invention to provide a recording and reproduction apparatus capable of carrying out save recording and splice recording, and efficiently carrying out an editing operation without any burden on a user.
This object is achieved by the method and the system of the independant claims. Advantageous embodiments of the invention are characterized in the sub-claims. The recording and reproduction apparatus and method of the invention are capable of carrying out save recording and splice recording using a plurality of recording media such as a DVD, a hard disc, and/or a videotape.

According to the present invention, there is provided a recording and reproduction apparatus for recording and reproducing data in and from a plurality of recording media, comprising: save recording means for, if it is detected that data cannot be recorded in a first recording medium while the data is being recorded in the first recording medium, continuously recording the data in a second recording medium; and splice recording means for recording the save-recorded data, which is recorded in the second recording medium, in one of the recording media other than the second recording medium while the data is being recorded in the second recording medium.

Examples of a state in which it is determined that the data cannot be recorded during recording includes a state in which the residual capacity of the recording medium is lessened, and a state in which an abnormality occurs to a recording operation for recording the data in the recording medium, and in which normal recording cannot be carried out. If the residual capacity of the recording medium is lessened, for example, the save recording means stops recording the data in the first recording medium, and continuously records the data in the second recording medium. The splice recording means outputs the data which is save-recorded in the second recording medium, and records the output save-recorded data in the recording medium other than the second recording medium while recording the data in the second recording medium.

The other recording medium is a third recording medium or the first recording medium. If an abnormality occurs to the recording operation for recording the save-recorded data in the first recording medium, the data is splice-recorded in the third recording medium. If the residual capacity is lessened, the data is splice-recorded in one of the third and the first recording media. If the save-recorded data is splice-recorded in the first recording medium, the first recording medium is detachable, the first recording medium is exchanged to another first recording medium, and the save-recorded data is splice-recorded in the another first recording medium.

As concrete configuration for realizing the save recording means and the splice recording means if the two recording media are used, there is provided a recording and reproduction apparatus comprising: a first recording and reproduction section which records and reproduces data in and from a detachable first recording medium; a second recording and reproduction section which records and reproduces the data in and from a fixed second recording medium; a capacity detection section which detects a residual capacity of the first recording medium; a recording medium detection section which detects whether the first recording medium is present; and a controller which controls the first and the second recording and reproduction sections.

The controller comprises: means for, if it is detected that the residual capacity of the first recording medium is lessened while the data is being recorded in the first recording medium, stopping the first recording and reproduction section, actuating the second recording and reproduction section, and carrying out save recording of the data in the second recording medium; and means for, if it is detected that the first recording medium is exchanged to another first recording medium, actuating the first and the second recording and reproduction sections, and carrying out splice recording of the save-recorded data, which is recorded in the second recording medium, in the first recording medium while the data is being recorded in the second recording medium.

The recording and reproduction apparatus further comprises setting means for making a setting as to whether the splice recording is started automatically or by an manual operation. If the setting is made such that the splice recording is started by the manual operation, and a start signal is input by the manual operation, then the controller starts the splice recording. If the setting is made such that the splice recording is started automatically, and the controller recognizes that the first recording medium is exchanged to another new recording medium based on a detection result as to whether the first recording medium is present, then the controller controls the splice recording of the data to be automatically started in the new recording medium.

Further, the controller displays information on the data, which is save-recorded in the second recording medium, in a different state from a state of information on normally recorded data. For example, the data is made distinguishable as splice recording data, or the data is displayed differently in a color, a magnitude, a shape, or the like, from the other data. By doing so, the save-recorded data can be easily distinguished from the other data. Thus, the presence of this data is clarified, thereby facilitating editing.

Advantageous embodiments of the invention are now described with reference to the drawings in which:
Fig. 1 is a schematic block diagram of a recording and reproduction apparatus using a DVD and a hard disc according to one embodiment of the present invention;
Fig. 2 is a time chart for save recording and splice recording according to one embodiment;
Fig. 3 is a flowchart for executing automatic save recording and automatic splice recording according to one embodiment;
Fig. 4 depicts a menu screen used when the splice recording is set according to one embodiment;
Fig. 5 depicts a setting screen for the automatic splice recording according to one embodiment;
Fig. 6 depicts a menu screen used when the save recording is set according to one embodiment;
Fig. 7 depicts a setting screen for the automatic save recording according to one embodiment;
Fig. 8 depicts a recording list including a splice-recorded program according to one embodiment;
Fig. 9 is a flowchart for executing the automatic save recording and manual splice recording according to one embodiment;
Fig. 10 is a schematic block diagram of a recording and reproduction apparatus using a videotape and a hard disc according to another embodiment of the present invention;
Fig. 11 is a time chart for save recording and splice recording according to another embodiment;
Fig. 12 is a flowchart for executing the automatic save recording and the automatic splice recording according to another embodiment; and
Fig. 13 is a flowchart for executing the automatic save recording and manual splice recording according to another embodiment.

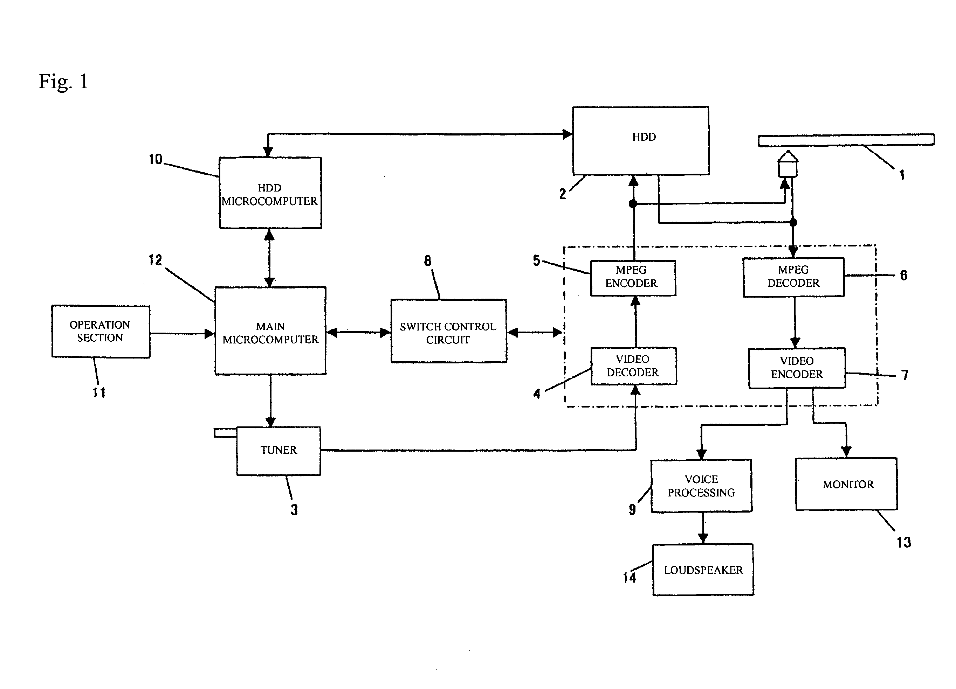

A recording and reproduction apparatus according to one embodiment of the present invention is shown in Fig. 1. This recording and reproduction apparatus records and reproduces data such as a program in and from two recording media. The apparatus uses a DVD 1 as a detachable recording medium, and a hard disc 2 as a fixed, randomly accessible recording medium.

The recording and reproduction apparatus includes a video decoder 4 which converts an analog video signal input from a tuner 3 or an external input terminal into an uncompressed digital signal, an MPEG encoder 5 which compresses the digital signal, an MPEG decoder 6 which expands the compressed digital signal, a video encoder 7 which converts the digital signal into an analog video signal, and which outputs the analog video signal to an external output terminal, a switch control circuit 8 which switches over input and output of the digital signal between the DVD 1 and the hard disc 2, a voice processing circuit 9 which carries out a voice output processing, an HDD microcomputer 10 which controls recording and reproduction of the data in and from the hard disc 2, an operation section 11 such as a remote controller or a main body panel which inputs instructions for various settings, channel selection, recording and reproduction, and the like, and a main microcomputer 12 which controls the other constituent elements to be driven, and which controls recording and reproduction of the data in and from the DVD 1. It is assumed herein that the video signal is a signal that includes a picture signal and a voice signal. The respective encoders and decoders are shared between the recording and reproduction of data in and from the DVD 1 and the recording and reproduction of data in and from the hard disc 2. The encoders and decoders constitute a recording and reproduction section for the recording media.

If the recording and reproduction apparatus is to record a program, then the operation section 11 selects a channel, and the tuner 3 receives a signal from a terrestrial broadcast or a satellite broadcast on the selected channel through an antenna. The tuner 3 also receives a signal from a cable network or an external equipment connected to the external input terminal. The video decoder 4 and the MPEG encoder 5 process the received analog video signal according to a predetermined method. The processed signal data is recorded in either the hard disc 2 or the DVD 1, and a file is created for the data.

If the recording and reproduction apparatus is to reproduce the program, data in a file selected by the operation section 11 is called from the hard disc 2 or the DVD 1. The MPEG decoder 6 and the video encoder 7 conduct the data to a signal processing according to a predetermined method, thereby converting the data into an analog video signal. This analog video signal is output from the external output terminal to a monitor 13 of a television set or the like. A user can thus view the program on a screen of the monitor 13 and can and listen to the program through a loudspeaker 14.

The main microcomputer 12 has not only a function of normal recording and reproduction for recording data in one recording medium, and for reproducing the data from one recording medium, but also a function of time-shift reproduction for reproducing already recorded data while recording data. The main microcomputer 12 also has a function of recording and reproducing data while making two recording media related to each other. Namely, the main microcomputer 12 has a save recording function of changing a data recording destination from a first recording medium to a second recording medium, and a splice recording function of copying the data recorded in the second recording medium into the first recording medium.

With the save recording function, if a residual capacity of the DVD 1 is lessened while recording data in the DVD 1, then the recording destination is changed from the DVD 1 to the hard disc 2, and the data is continuously recorded in the hard disc 2. With the splice recording function, if the DVD 1 now in use is exchanged to another recordable DVD 1, then data recorded in the hard disc 2 is output while recording data in the hard disc 2 using a time-shift reproduction function, and the output data is recorded in the DVD 1 exchanged from the original DVD 1.

In order to execute these functions, the main microcomputer 12 includes a capacity detection section which detects the residual capacity of the DVD 1, and a DVD detection section which detects whether the DVD 1 is present. The capacity detection section is realized by a function of the main microcomputer 12 of constantly detecting a currently-used capacity and a currently-used area of the DVD 1. If the capacity detection section detects that the residual capacity of the DVD 1 is equal to or less than a threshold, the main microcomputer 12 starts the save recording. It is noted that the threshold can be arbitrarily set. A reflection amount of a laser light changes when the DVD 1 is attached to the recording and reproduction apparatus. Accordingly, the DVD detection section detects that the DVD 1 is exchanged to another DVD 1 using an optical pickup for recording. If the DVD detection section detects that the DVD 1 is exchanged to another DVD 1, the main microcomputer 12 starts the splice recording.

The main microcomputer 12 automatically executes the save recording and the splice recording. If a setting is made such that the save recording and the splice recording are executed by a manual operation, the save recording and the splice recording are started in response to an input signal from the operation section 11.

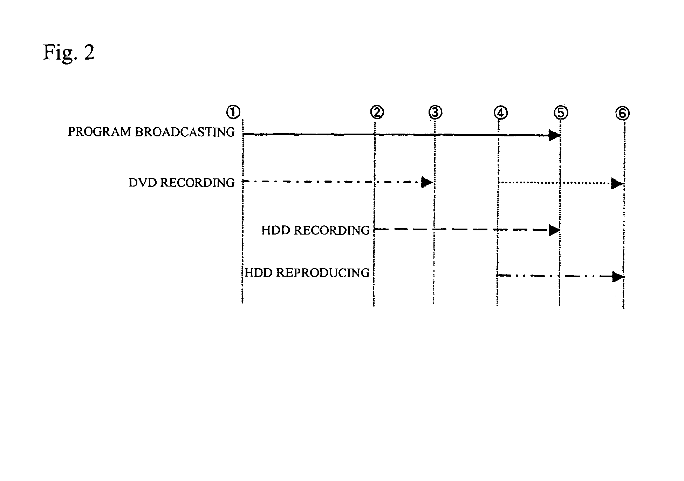

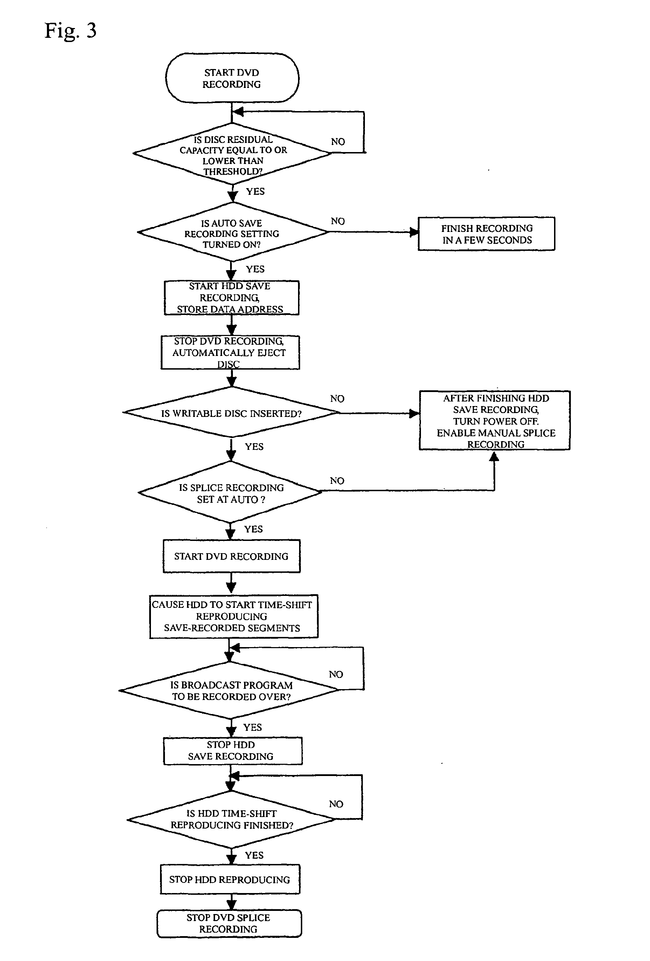

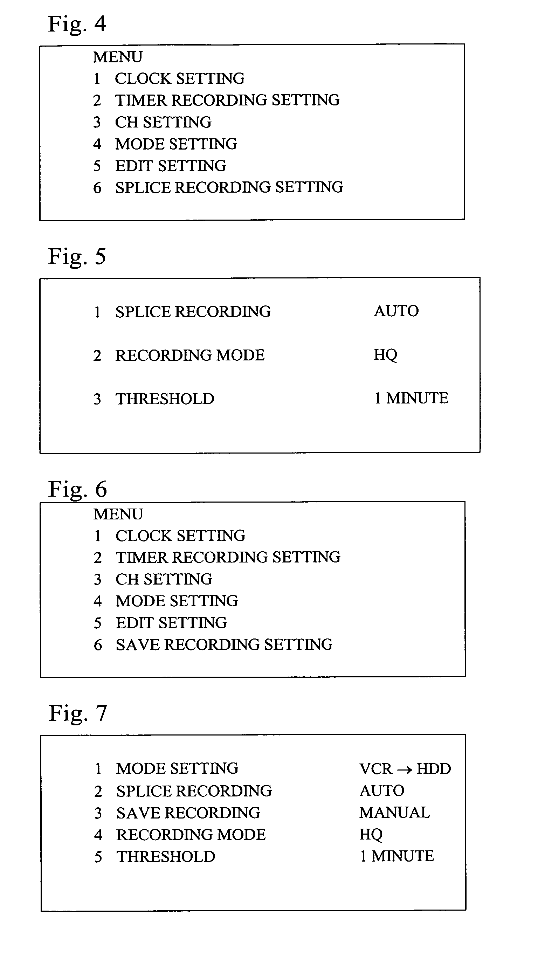

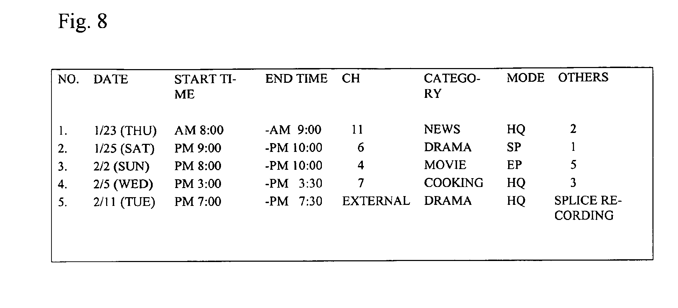

A series of operations for recording a program based on these functions will next be described with reference to Figs. 2 and 3. A menu screen is displayed on the monitor 12 in advance, and either an automatic operation or a manual operation is set on the menu screen. A setting for the splice recording is made first. As shown in Fig. 4, a splice recording setting item is displayed on the menu screen. If the user selects the splice recording setting item, a setting screen shown in Fig. 5 is displayed. On this setting screen, the user can select an automatic operation or a manual operation for the splice recording. In this embodiment, the user selects the automatic operation for the splice recording (selects automatic splice recording). On the setting screen, the user can also set a threshold. To make a setting for the save recording, a save recording setting item shown in Fig. 6 is displayed on the menu screen. If the user selects the save recording setting item, a setting screen shown in Fig. 7 is displayed. On this setting screen, the user can select an automatic operation or a manual operation for the save recording. In this embodiment, the user selects the automatic operation for the save recording (selects automatic save recording).

While all the operations are set at automatic operations, the apparatus starts recording the program in the DVD 1 based on the setting information input in advance (<1> in Fig. 2). The main microcomputer 12 constantly monitors the residual capacity of the DVD 1. If detecting that the residual capacity is equal to or less than the threshold, the main microcomputer 12 checks whether the automatic save recording is set. If the automatic save recording is not set, the main microcomputer 12 controls the recording of the program to be finished. If the automatic save recording is set, the main microcomputer 12 instructs the HDD microcomputer 10 to carry out the save recording. Accordingly, the recording of the program in the hard disc 2 is started automatically (<2> in Fig. 2). At this moment, the HDD microcomputer 10 stores a recording start data address in a memory. After the save recording is started, the recording of the program in the DVD 1 is stopped, and the DVD 1 is automatically ejected (<3> in Fig. 2). It takes several microseconds since the recording of the program in the hard disc 2 is started until the recording of the program in the DVD 1 is stopped. Therefore, it does not occur that the residual capacity of the DVD 1 is consumed before the recording of the program in the hard disc 2 is started.

When the DVD 1 is ejected and another DVD 1 is attached to the apparatus, the main microcomputer 12 detects that the DVD 1 is exchanged to another DVD 1. The main microcomputer 12 detects a residual capacity of the new DVD 1 to check whether the capacity is sufficient, and checks whether the automatic splice recording is set. If the new DVD 1 is not attached, if the new DVD 1 is attached but the residual capacity of the new DVD 1 is insufficient to record the remainder of the program, or if the automatic splice recording is not set, then the splice recording is not carried out and the save recording for recording the program in the hard disc 2 is continuously carried out. When the planned recording is finished, a power of the apparatus is turned off.

If the new DVD 1 is attached, the residual capacity of the new DVD 1 is sufficient to record the remainder of the program, and the automatic splice recording is set, then the splice recording is started (<4> in Fig. 2). First, the main microcomputer 12 starts recording the program in the DVD 1. When receiving a recording start signal from the main microcomputer 12, the HDD microcomputer 10 starts time-shift reproduction. In the time-shift reproduction, the HDD microcomputer 10 reproduces the save-recorded data based on the stored data address from the start while continuously recording data in the hard disc 2. The save-recorded data output from the hard disc 2 is copied into the DVD 1, thereby carrying out the splice recording.

The recording of the program in the DVD 1 is started before the start of the time-shift reproduction. Due to this, an end of the program recorded during first-half recording overlaps with a start of the program recorded during second-half recording. As a result, the program is recorded in the two DVD's 1 without intermission.

When the recording target program is over, the main microcomputer 12 stops the save recording of the data in the hard disc 2 based on recording setting information (<5> in Fig. 2), but continues the splice recording. When the program which is save-recorded in the hard disc 2 is reproduced up to the end, the time-shift reproduction is stopped and the recording of the data in the DVD 1 is stopped, thereby finishing the splice recording (<6> in Fig. 2).

As can be seen, the first half of the program is recorded in the original DVD 1, and the second half of the program is recorded in the new DVD1 and the hard disc 2. As shown in Fig. 8, on a recording list for the hard disc 2, information on the splice-recorded program is displayed so as to be distinguished from information on normally recorded programs. Namely, for the splice-recorded program, "splice recording" is displayed and "external" is displayed as a channel item. Thus, the user can instantly recognize that the program is the splice-recorded program, and designate the program correctly during an editing operation.

The editing operation is carried out as follows. The data recorded in the original DVD 1 is temporarily copied into the hard disc 2, and then copied into the new DVD 1, thereby recording the entire recording target program in one DVD 1. Alternatively, pieces of data recorded in the two DVD's 1, respectively, are copied into the hard disc 2, synthesized into one recorded program. The one recorded program is copied into the DVD 1. Further, when the splice recording or these copying operations are carried out, a high-speed operation may be enabled to carry out high-speed dubbing such as double speed dubbing or triple speed dubbing.

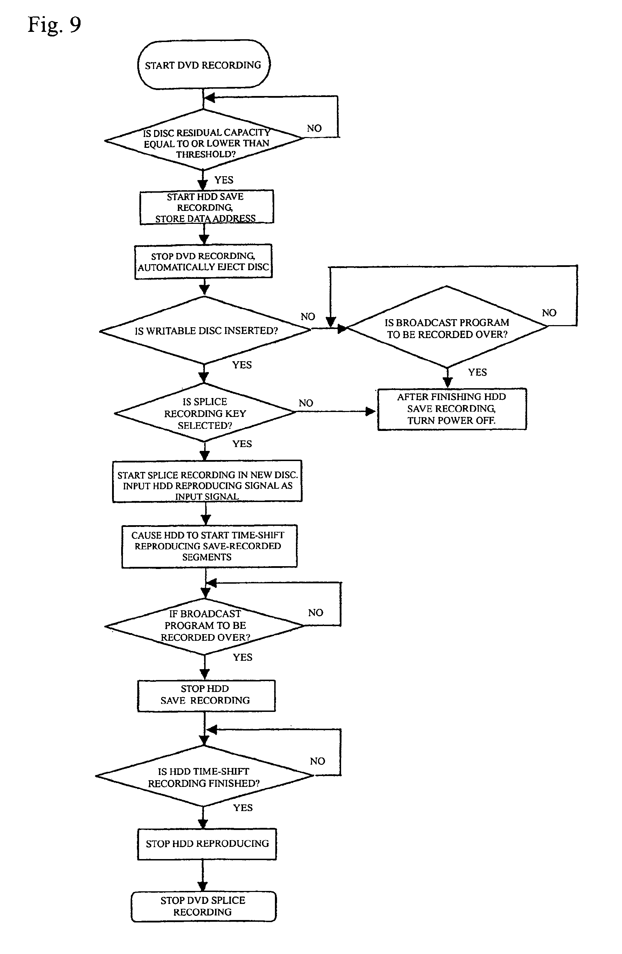

An instance in which manual splice recording is set will next be described. It is assumed herein that the automatic save recording is set. As shown in Fig. 9, similarly to Fig. 3, if it is detected that the residual capacity of the DVD 1 is equal to or less than the threshold, the HDD microcomputer 10 starts the save recording. If the DVD 1 is exchanged to another DVD 1, the main microcomputer 12 monitors whether a signal for splice recording is input from the operation section 11. Whether the input signal is present is determined based on whether a splice recording key provided on the operation section 11 is operated. If no input signal is present, the power is turned off after the save recording is finished. If the input signal is present, then the recording of the program in the DVD 1 is started, the data is time-shift reproduced from the hard disc 2, and the splice recording is started. The remaining operations are the same as those shown in Fig. 3.

In this embodiment, the splice recording is started during the save recording. However, if the manual splice recording is set, the splice recording can be started after the save recording is finished. For example, if the residual capacity of the new DVD 1 exchanged from the original DVD 1 is insufficient relative to a quantity of data to be subjected to the splice recording, the splice recording can be advantageously executed after the save recording is finished.

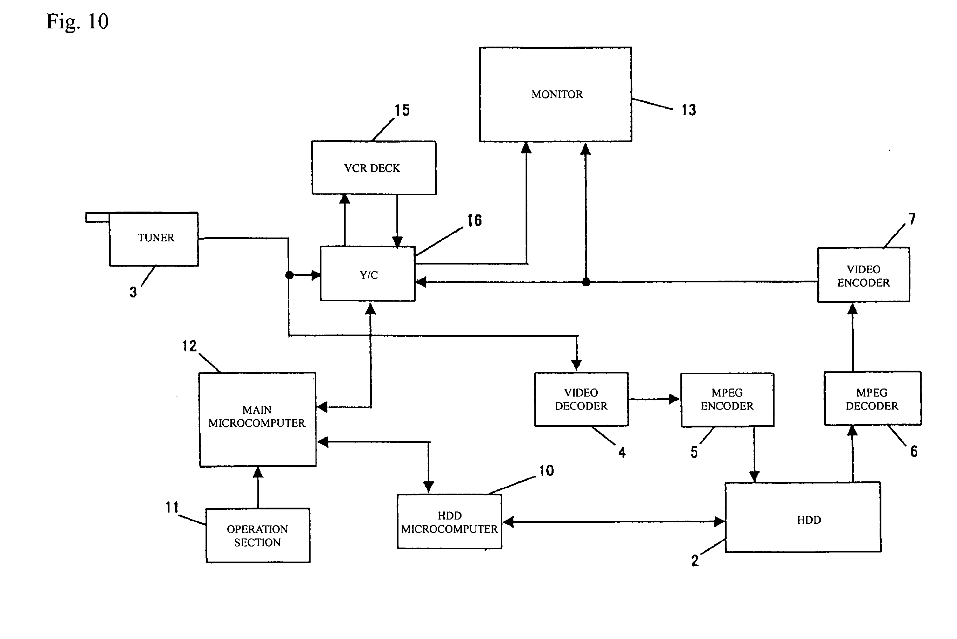

The recording and reproduction apparatus according to this embodiment uses the DVD 1 and the hard disc 2 as the recording media. Alternatively, a videotape can be used instead of the DVD 1. As shown in Fig. 10, a recording and reproduction apparatus according to another embodiment of the present invention includes a video deck ("VCR") 15, and a Y/C circuit 16 which processes a video signal. The main microcomputer 12 controls the VCR 15 to be driven. The other constituent elements of the recording and reproduction apparatus and functions of the main microcomputer 12 in this embodiment are equal to those described in the preceding embodiment.

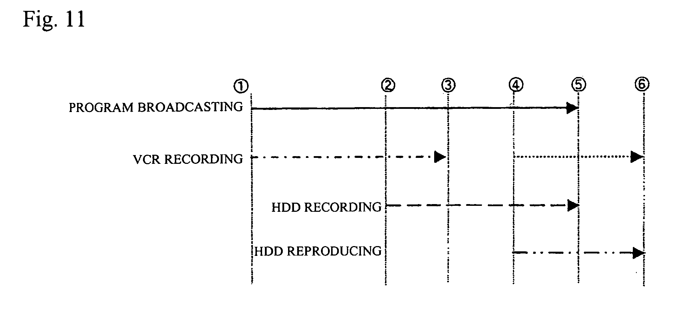

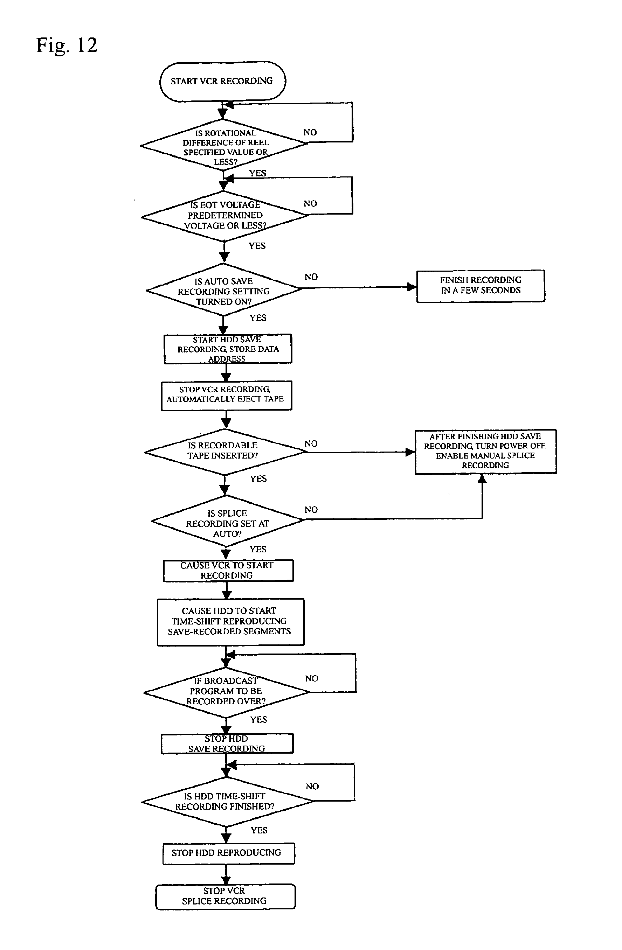

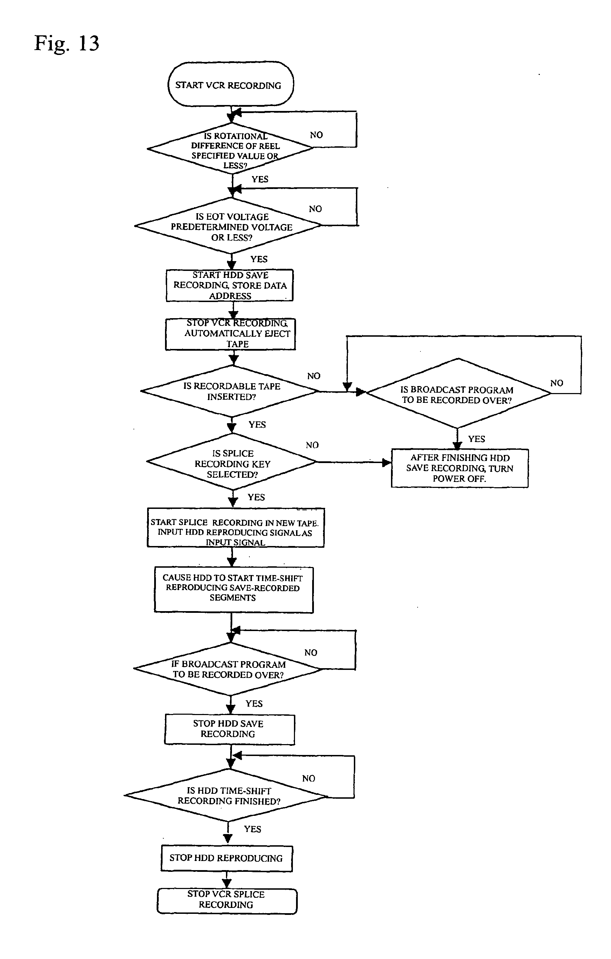

Figs. 11, 12, and 13 depict operations for save recording and splice recording while data is recorded in a videotape. Since basic operations are equal to those in the preceding embodiment, whether automatic or manual operations, the operations will not be described herein in detail. Differently from the preceding embodiment, however, a residual capacity of the videotape is detected by detecting an EOT (End of Tape) voltage after it is detected that a recording position nears an end of the videotape based on a rotational speed of a reel. Alternatively, based on a rotational speed difference between two reels, it is detected that the recording position nears the end of the videotape. Further, whether the videotape is present is detected based on whether the EOT voltage or a BOT (Begin of Tape) voltage can be detected. Alternatively, whether the videotape is present is detected based on an output of an existing cassette-down switch or an existing mode switch. The cassette-down switch is a switch which is actuated when a videotape is attached to the apparatus. The mode switch is a switch for controlling a rotational operation of a hub during winding of the videotape.

Needless to say, the present invention is not limited to the embodiments stated so far, and many changes and modifications can be made to the embodiments within the scope of the present invention. In the embodiments, the splice recording is executed for the recording of the program. The present invention is also applicable to an instance of recording data input from the other recording medium. As the recording media, a CD and a semiconductor memory may be used. A combination of the recording media is not limited to a combination of the recording media of different types, but can be arbitrarily set. For example, the recording media may be a combination of two DVD's of the same type, or a combination of a detachable hard disc and a fixed hard disc.

Furthermore, the recording and reproduction apparatus may be a composite equipment capable of using three or more recording media. The composite apparatus can save-record data in a second recording medium and splice-record the data from the second recording medium to a third recording medium while recording data in a first recording medium. This can dispense with exchange of the first recording medium. In addition, even if the user is not present, all operations can be carried out automatically. Besides, even if an abnormality occurs to the recording and reproduction section for the first recording medium and the data cannot be recorded in the first recording medium, then this abnormal state can be detected, and the data can be recorded in the second and the third recording media other than the first recording medium. It is, therefore, possible to eliminate recording errors, and to thereby realize a highly reliable product.

The recording and reproduction apparatus may be constituted so that a plurality of independent equipment each using a single recording medium are connected besides the composite equipment using a plurality of recording medium stated above. In this case, a control equipment which functions as the main microcomputer is provided, or one equipment is allowed to function as the control equipment and the other equipment are connected to the control equipment. By allowing the respective equipment to transmit and receive data to and from one another, the save recording and the splice recording from one recording medium to the other recording medium can be carried out. If so, it is possible to make use of already provided individual equipment without using the composite equipment.

As is evident from the description so far, according to the present invention, the splice recording is carried out while the save recording is carried out, whereby recording of data in different recording media can be simultaneously carried out, and recording time can be reduced as compared with an instance in which the recording of data in the respective recording media is carried out independently. In addition, by splice recording the data in a new recording medium, a series of data divided into pieces can be easily, entirely recorded in this new recording medium, thereby facilitating the editing operation.

## Claims

1. A recording and reproduction apparatus for recording and reproducing data in and from a plurality of recording media, comprising:
save recording means for, if it is detected that data cannot be recorded in a first recording medium while the data is being recorded in the first recording medium, continuously recording the data in a second recording medium; and
splice recording means for recording the data, which is recorded in the second recording medium, in one of the recording media other than the second recording medium while the data is being recorded in the second recording medium.

2. A recording and reproduction apparatus using a plurality of recording media, the recording media including at least one detachable recording medium, the apparatus comprising:
capacity detection means for detecting a residual capacity of one of the recording media;
save recording means for, if it is detected that the residual capacity of a detachable first recording medium is lessened while data is being recorded in the first recording medium, stopping recording the data in the first recording medium, and continuously recording the data in a second recording medium; and
splice recording means for recording the data, which is recorded in the second recording medium, in one of the recording media other than the second recording medium while the data is being recorded in the second recording medium.

3. The recording and reproduction apparatus according to claim 2, further comprising:
recording medium detection means for detecting whether one of the recording media is present, wherein
if it is detected that the first recording medium is exchanged to another recording medium, the splice recording means records the data in the another first recording medium.

4. A recording and reproduction apparatus comprising:
a first recording and reproduction section which records and reproduces data in and from a detachable first recording medium;
a second recording and reproduction section which records and reproduces the data in and from a fixed second recording medium;
a capacity detection section which detects a residual capacity of the first recording medium;
a recording medium detection section which detects whether the first recording medium is present; and
a controller which controls the first and the second recording and reproduction sections, wherein
the controller comprises:
means for, if it is detected that the residual capacity of the first recording medium is lessened while the data is being recorded in the first recording medium, stopping the first recording and reproduction section, actuating the second recording and reproduction section, and carrying out save recording of the data in the second recording medium; and
means for, if it is detected that the first recording medium is exchanged to another recording medium, actuating the first and the second recording and reproduction sections, and carrying out splice recording of the data, which is recorded in the second recording medium, in the another first recording medium while the data is being recorded in the second recording medium.

5. The recording and reproduction apparatus according to claim 4, further comprising:
setting means for making a setting as to whether the splice recording is started automatically or by an manual operation, wherein
if the setting is made such that the splice recording is started by the manual operation, and a start signal is input by the manual operation, then the controller starts the splice recording.

6. The recording and reproduction apparatus according to claim 4 or 5, wherein
the controller comprises display means for displaying information on the data, which is save-recorded in the second recording medium, in a different state from an state of information on normally recorded data.

7. A recording method for a recording and reproduction apparatus using a plurality of recording medium which include at least one detachable recording medium, the method comprising:
a step of, if capacity detection means for detecting a residual capacity of one of the recording media detects that the residual capacity of a detachable first recording medium is lessened while data is being recorded in the detachable first recording medium, starting save recording of the data in a second recording medium, and stopping recording of the data in the first recording medium; and
a step of, when the first recording medium is exchanged to another recording medium, starting splice recording of the data, which is recorded in the second recording medium, in the another first recording medium while the data is being recorded in the second recording medium.
